# EUROPEAN PATENT APPLICATION

(11) **EP 4 635 918 A1**
(43) Date of publication of application: **22.10.2025**
(21) Application number: 25170563.8
(22) Date of filing: 15.04.2025
(51) Int. Cl.: C02F 1/32, C02F 1/78, C02F 103/42, E04H 4/12, C02F 101/12, C02F 101/36

(54) **HIGH-EFFICIENCY ADVANCED OXIDATION PROCESS SYSTEM AND METHOD FOR REDUCING DISINFECTION BY-PRODUCTS IN SWIMMING POOL WATER**

(30) Priority: 15.04.2024 US 202463633888 P
(71) Applicant: Tequa-Top Ltd, 4672501 Herzliya (IL)
(72) Inventor: SHAMIR, Ran Aviv, 4672501 Herzliya (IL); DERY, Eytan, 2492000 Moshav MeOna (IL)
(74) Representative: Tiburzi, Andrea

(57) **Abstract**

An advanced oxidation process (AOP) system for reducing disinfection by-products (DBPs) in swimming pool water. The system comprises an air dryer for removing moisture from ambient air, a feed gas line for transferring the dried air to an UV-based ozone generator, and a treatment conduit with a UV-based ozone generator for treating the swimming pool water. The UV-based ozone generator includes UV lamps emitting UV light to produce ozone and hydroxyl radicals. The treatment conduit receives filtered pool water, treats it with the generated ozone as well as hydroxyl radicals to reduce DBPs below 0.3 ppm, and returns the treated water to the pool. The parallel arrangement of UV lamps in the UV-based ozone generator maximizes ozone production. Flow control valves optimize water flow rate through the treatment conduit. The system efficiently reduces DBPs, improves water quality, and enhances swimmer safety and comfort.

## Description

### FIELD AND BACKGROUND OF THE INVENTION

The present invention, in some embodiments thereof, relates to an advanced oxidation process (AOP) system for reducing disinfection by-products (DBPs) in swimming pool water. More specifically, the invention pertains to an AOP system that utilizes an air dryer and a UV-based ozone generator to efficiently treat swimming pool water and minimize the formation of DBPs.

Swimming pools commonly employ chlorine-based disinfectants to maintain water hygiene. However, the interaction of chlorine with organic matter in the water can lead to the formation of disinfection by-products (DBPs), which have been associated with adverse health effects and user discomfort. Advanced oxidation processes (AOPs) have emerged as a promising solution to reduce DBPs in swimming pool water.

### SUMMARY OF THE INVENTION

According to an aspect of some embodiments of the present invention there is provided a high-efficiency advanced oxidation process (AOP) system for reducing disinfection by-products (DBPs) in swimming pool water. The system addresses the limitations of conventional pool water treatment methods by combining an air dryer, an UV-based ozone generator, and a treatment conduit to efficiently remove DBPs and improve water quality.

In some embodiments of the present invention, the AOP system comprises an air dryer for removing moisture from ambient air, a feed gas line for transferring the dried air to an UV-based ozone generator, and a treatment conduit with a UV-based ozone generator for treating the swimming pool water. The air dryer may be a refrigerant dryer, a desiccant dryer, or a membrane dryer. The UV-based ozone generator includes UV lamps, preferably low-pressure mercury lamps, that emit light to produce ozone and hydroxyl radicals. The treatment conduit receives filtered pool water, treats it with the generated ozone to reduce DBPs below 0.3 ppm, and returns the treated water to the pool. The treatment conduit can be made of ozone and UV-resistant materials, such as stainless steel or UV-stabilized polymers.

In other embodiments, the UV lamps in the UV-based ozone generator are arranged in a parallel configuration to maximize ozone production capacity. The parallel arrangement allows for a larger volume of air to be exposed to UV light simultaneously, increasing the ozone generation rate. Alternatively, the UV lamps are arranged in a spiral configuration around a central axis of the treatment conduit, such that the swimming pool water flowing through the treatment conduit is exposed to UV light from multiple angles.

The AOP system may also include a control unit for monitoring and adjusting the operating parameters. The control unit comprises sensors for measuring water quality parameters, such as DBP levels, pH, and temperature, and a controller that receives data from the sensors and adjusts the UV lamp intensity and water flow rate through the treatment conduit accordingly.

In a further embodiment, the AOP system incorporates flow control valves to optimize the water flow rate through the treatment conduit. Various types of valves, such as ball valves, butterfly valves, globe valves, needle valves, or diaphragm valves, can be used depending on the required flow control precision and compatibility with the pool water.

According to an aspect of some embodiments of the present invention there is provided a method for reducing DBPs in swimming pool water using the AOP system. The method involves drying ambient air using the air dryer, transferring the dried air to the UV-based ozone generator, filtering the pool water, receiving the filtered water into the treatment conduit, generating ozone using UV lamps, treating the water with ozone to reduce DBPs, and returning the treated water to the pool. The method may further include monitoring the air humidity and adjusting the air dryer operation to maintain optimal ozone production efficiency.

By combining an air dryer, an UV-based ozone generator with parallel UV lamps, a treatment conduit, and a control system, the AOP system of the present invention efficiently reduces DBPs in swimming pool water, improves water quality, and enhances swimmer safety and comfort. The system's modular design and flow control capabilities make it adaptable to various pool sizes and configurations, offering a cost-effective and environmentally friendly solution for pool water treatment.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Implementation of the method and/or system of embodiments of the invention can involve performing or completing selected tasks manually, automatically, or a combination thereof. Moreover, according to actual instrumentation and equipment of embodiments of the method and/or system of the invention, several selected tasks could be implemented by hardware, by software or by firmware or by a combination thereof using an operating system.

For example, hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

### BRIEF DESCRIPTION OF THE SEVERAL VIEWS OF THE DRAWING(S)

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a schematic diagram of an AOP system, showing main components and the flow of water and air through the system, according to some embodiments of the present invention;
FIG. 2: is a detailed sectional view of the UV-based ozone generator, illustrating an arrangement of the UV lamps and a flow of dried air through the generator, according to some embodiments of the present invention;
FIG. 3 a schematic diagram of an AOP system with a control unit, showing sensors and their connections to the AOP system, according to some embodiments of the present invention; and
FIG. 4 a flow chart illustrating a method for reducing DBPs in swimming pool water using an AOP system such as the system described in Figure 1, according to some embodiments of the present invention.

### DESCRIPTION OF SPECIFIC EMBODIMENTS OF THE INVENTION

The present invention, in some embodiments thereof, relates to an advanced oxidation process (AOP) system for reducing disinfection by-products (DBPs) in swimming pool water. More specifically, the invention pertains to an AOP system that utilizes an air dryer and a UV-based ozone generator to efficiently treat swimming pool water and minimize the formation of DBPs.

According to some embodiments of the invention there is provided a high-efficiency advanced oxidation process (AOP) system and method for reducing disinfection by-products (DBPs) in swimming pool water. The AOP system combines an air dryer, an UV-based ozone generator with parallel UV lamps, a treatment conduit, and a control system to effectively remove DBPs and improve water quality. The system includes an air dryer that removes moisture from ambient air before it enters the UV-based ozone generator, enhancing ozone production efficiency and preventing the formation of undesired by-products. The system UV-based ozone generator with UV lamps that utilizes low-pressure mercury lamps emitting UV light to generate ozone and hydroxyl radicals. The UV lamps are optionally in a parallel arrangement to maximize ozone production capacity. The system also includes a treatment conduit that receives filtered pool water, exposes it to the generated ozone, and reduces DBPs optionally to levels below 0.3 ppm. The conduit is made of ozone and UV-resistant materials.

Optionally a control unit is used to monitor water quality parameters (e.g., DBP levels, pH, temperature) using sensors and to adjust UV lamp(s) intensity and/or water flow rate through the treatment conduit to optimize system performance. For instance, flow control valves are used to regulate the water flow rate through the treatment conduit to ensure optimal contact time with ozone and efficient DBP reduction.

The methods and systems described herein allow providing efficient DBP reduction. The combination of an air dryer, parallel UV lamps, and a treatment conduit enables the system to effectively reduce DBPs in pool water to safe levels, improving water quality and swimmer safety. The methods and systems described herein allow providing enhanced ozone production. The use of an air dryer and the parallel arrangement of UV lamps in the UV-based ozone generator maximizes ozone production capacity, making the system more efficient and cost-effective. The methods and systems described herein have a modular design and flow control capabilities that may be tailored to various pool sizes and configurations, making it a versatile solution for pool water treatment.

Optionally, the integrated control unit monitors water quality parameters and adjusts system settings in real-time, ensuring optimal performance and minimizing the need for manual intervention. By efficiently reducing DBPs, the AOP system minimizes the need for excessive chlorination and water replacement, conserving water resources and reducing the environmental impact of pool maintenance. The high efficiency of the AOP system leads to reduced energy consumption, lower maintenance costs, and extended equipment lifespan, resulting in long-term cost savings for pool owners and operators.

In summary, these embodiments provide a high-efficiency, customizable, and environmentally friendly solution for reducing DBPs in swimming pool water. By improving water quality, enhancing swimmer comfort and safety, and offering cost savings, the AOP system addresses the limitations of conventional pool water treatment methods and sets a new standard for pool maintenance.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

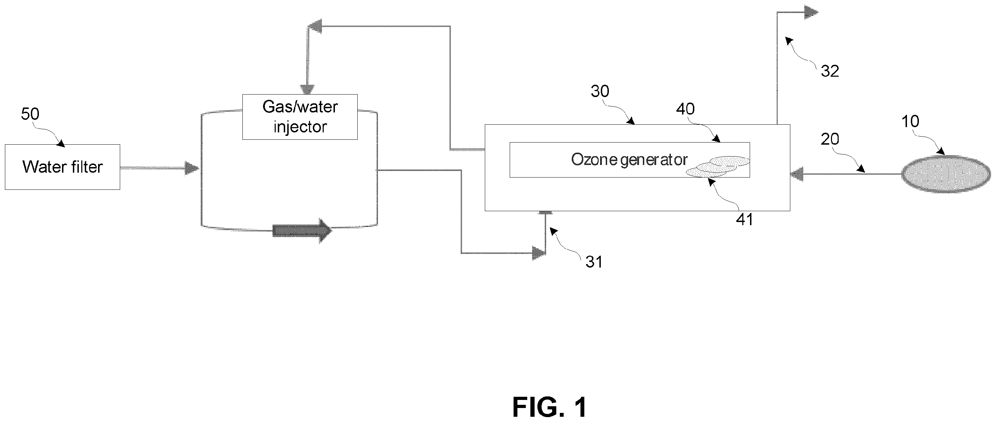

Referring now to the drawings, FIG. 1 illustrates an advanced oxidation process (AOP) system 100 for reducing disinfection by-products (DBPs) in swimming pool water. The system 100 comprises an air dryer (10) configured to dry ambient air by removing moisture from the air. A feed gas line (20) is connected to the air dryer (10) for receiving the dried air.

The system 100 further includes a treatment conduit (30) adapted to treat swimming pool water. The treatment conduit (30) comprises a pool water inlet (31) adapted to receive the swimming pool water, a UV-based ozone generator (40), and a pool water outlet (32) adapted to output the treated swimming pool water. The treatment conduit (30) may be made of a material resistant to ozone and UV light, such as stainless steel and/or UV-stabilized polymers. Stainless steel will also provide some corrosion resistance and the ability to withstand high concentrations of ozone. UV-stabilized polymers, such as certain grades of PVC or PTFE, are resistant to UV degradation and can maintain their structural integrity when exposed to UV light.

The UV-based ozone generator (40) comprises one or more UV lamps (41) configured to emit UV light. The UV lamp(s) maybe low-pressure mercury lamps. The one or more UV lamps (41) may be Vacuum ultraviolet (VUV) lamps which generate UV wavelengths in the band of 100-200 nm. Using a VUV lamp can eliminate the wide spectrum of UV light production and the issue of ozone creation and destruction from the same UV lamp.

The UV-based ozone generator (40) is connected to the feed gas line (20) and configured to receive the dried air from the air dryer (10). Clean, dry air allows increasing the efficiency of ozone production as contaminations in the air such as humidity are removed and therefore do not absorb UV light that should have been used for ozone production.

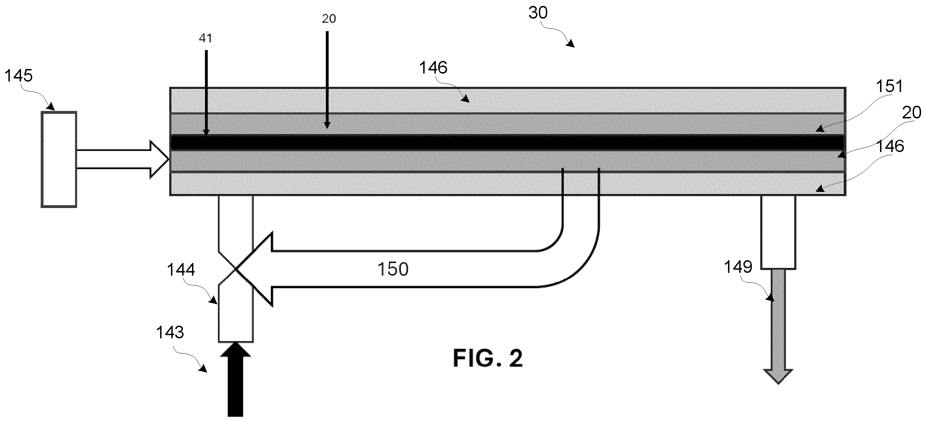

As depicted in FIG. 2 The UV lamp(s) (41) may be arranged in or around an ozone generation channel (151) conducting air from an air dryer (145) which is parallel , along the treatment conduit (30), to a water channel (146) to allow the UV-based ozone generator to process a larger volume of air simultaneously, increasing the overall ozone output. For example, the UV lamp(s) (41) are positioned with their longitudinal axes parallel water channel 146, in a quartz sleeve (20). The UV lamp(s) (which can be for example as long as 60 cm or more) is installed parallel to the airflow, so that biological contaminants traveling through an air-stream are subjected to much longer dwell time with the UV energy. Biological contaminants passing parallel UV lamp will receive much longer UV exposure than contaminants passing perpendicular to the UV lamp. Increased exposure or dwell time translates to more UV energy delivered to the contaminants, which results in a much higher disinfection rate. These lamps may be housed within quartz sleeves or sleeves from UV-transparent fluoropolymers, which protect the lamps from the air flow and ensure efficient transmission of UV light. The dried air from the air dryer (145, 10) enters the ozone generation channel (151), which is the UV-based ozone generator (40), through an inlet and is directed along the UV lamp(s) (41). As the air flows past the lamp(s), it is exposed to the high-intensity UV light, which initiates the ozone generation process. The UV light dissociates the oxygen molecules (O2) in the air into oxygen atoms (O), which then combine with other oxygen molecules to form ozone (O3). Additionally, the UV light at 185 nm wavelength interacts with water molecules (H2O) in the air to produce hydroxyl radicals (OH-), which further contribute to the oxidation of DBPs in the swimming pool water. The parallel arrangement of the UV lamps (41) ensures that a large surface area of the lamps is exposed to the air flow, maximizing the interaction between the UV light and the oxygen molecules. This configuration allows for a higher rate of ozone production compared to a single lamp or a series arrangement, where the air flow may not have sufficient contact time with the UV light. Ozone rich air is conducted via an ozone rich conducting channel (150) into a mixing chamber (144) that mixes it with filtered water originated from the filter (143). Treated water are conducted to the pool (149).

To further enhance the ozone production capacity, the UV-based ozone generator (40) may incorporate reflectors behind the UV lamp(s) (41). These reflectors are typically made of highly reflective materials, such as polished aluminum or specialized UV-reflective coatings. The reflectors help to redirect the UV light that would otherwise be lost, back towards the air flow, increasing the overall UV exposure and ozone generation efficiency.

Optionally an arrangement if UV lamps is used. Optionally, spacing between the UV lamps (41) in the parallel configuration is carefully designed to optimize the air flow and UV exposure. The spacing should be sufficient to allow for adequate air circulation and prevent shadowing effects between the lamps, while also ensuring that the air has enough contact time with the UV light for efficient ozone generation.

By arranging the UV lamps (41) in a parallel configuration, the UV-based ozone generator (40) can produce a higher volume of ozone compared to other arrangements. This increased ozone production capacity enables the AOP system to effectively treat larger volumes of swimming pool water and achieve the desired reduction in DBPs more efficiently.

The air dryer may be, a refrigerant dryer that work by cooling the air to condense moisture, which is then removed. The air dryer may be a desiccant dryer that uses moisture-absorbing materials, such as silica gel or activated alumina, to remove humidity from the air. The air dryer may be a membrane dryer that employs semi-permeable membranes that selectively allow water vapor to pass through while retaining the dried air.

In operation, the at least one UV lamp (41) is configured to treat the swimming pool water by generating ozone based on exposing the dried air to UV light. The removal of moisture from the ambient air by the air dryer (10) is performed prior to the air entering the UV-based ozone generator (40).

The air dryer (10) removes moisture from the ambient air before it enters the UV-based ozone generator (40). This pre-treatment of the air enhances the efficiency of ozone production and minimizes the formation of undesired by-products, such as nitrogen oxides and nitric acid, which can lead to corrosion and reduced ozone capacity.

The UV-based ozone generator (40) employs at least one UV lamp (41) to generate ozone by exposing the dried air to UV light. The UV lamp (41) is selected to emit UV light at specific wavelengths, such as 253.7 nm and 185 nm. It should be noted that ozone is produced at wavelengths below 240nm, with peak production occurring at 185nm - therefore the selected UV lamp may have a specific wavelength of 185 nm.

The treatment conduit (30) is designed to efficiently treat the swimming pool water by receiving the water through the pool water inlet (31), exposing it to the ozone generated by the UV-based ozone generator (40), and outputting the treated water through the pool water outlet (32). This process effectively reduces the concentration of DBPs in the swimming pool water, improving water quality and user comfort.

Optionally, a water recycling line is added for recirculating a portion of the treated water via the treatment conduit (30), for instance using injector (51), for instance a pump. This allows treat the same water portion few times before it is outputted to the pool via outlet (32).

The AOP system of some embodiments of the present invention offers several advantages over conventional pool water treatment methods. By incorporating an air dryer (10) and a UV-based ozone generator (40), the system achieves efficient ozone production while minimizing the formation of undesired by-products. The targeted reduction of DBPs in the swimming pool water enhances water quality, reduces user discomfort, and promotes a safer and more enjoyable swimming experience.

Optionally, the AOP system further comprises a filtration system (50) for filtering the swimming pool water before entering the treatment conduit (30). The filtration system (50) is designed to remove particulate matter, debris, and other contaminants from the swimming pool water, thereby enhancing the overall efficiency of the AOP treatment process. By pre-filtering the water, the filtration system (50) reduces the burden on the UV-based ozone generator (40) and improves the system's ability to reduce DBPs.

Installing the treatment conduit (30) after the filtration system (50) and treating the complete flow rate of the filtered swimming pool water guarantees a comprehensive reduction of DBPs to below 0.3 ppm, addressing common problems associated with DBPs, such as eye irritation and strong chlorine odor. By effectively reducing DBPs, the invention significantly improves the overall swimming experience for pool users, providing a safer and more comfortable environment.

The treatment conduit (30) of the AOP system may be designed to reduce the concentration of DBPs in the swimming pool water to below 0.3 ppm (parts per million). This target level of DBP reduction ensures that the treated water meets stringent quality standards and significantly minimizes the potential for adverse health effects and user discomfort associated with DBPs. The combination of the air dryer (10), UV-based ozone generator (40), and treatment conduit (30) enables the system to consistently achieve this desired level of DBP reduction.

Optionally, the UV light emitted by at least one UV lamp (41) in the UV-based ozone generator (40) has specific wavelengths of 253.7 nm and 185 nm. The 185nm wavelength has been found to be particularly effective for ozone generation and the subsequent oxidation of DBPs in swimming pool water. The UV lamp (41) is selected to optimize the production of ozone at these specific wavelengths, enhancing the overall efficiency and effectiveness of the AOP system in reducing DBPs.

When the dried air is exposed to UV light at this wavelength, oxygen molecules (O2) are split into oxygen atoms (O), which then combine with other oxygen molecules to form ozone (O3). The UV light is also effective in producing hydroxyl radicals (OH·) from water molecules. These hydroxyl radicals are highly reactive and contribute to the oxidation of DBPs in the swimming pool water.

By utilizing UV light at these specific wavelengths, such as 253.7 nm and 185 nm, the AOP system maximizes the production of ozone and hydroxyl radicals, which are the key components responsible for the reduction of DBPs in the swimming pool water. The synergistic effect of ozone and hydroxyl radicals enhances the overall oxidation process, leading to a more efficient and effective treatment of the water.

The above-described integration of an air dryer (10) in the AOP system allows removing moisture from the ambient air before it enters the UV-based ozone generator (40. This effectively addresses the issue of reduced ozone yield caused by humidity. This pretreatment of the air enhances the efficiency of ozone production, setting it apart from traditional AOP systems. Moreover, this also prevents undesired reactions that can occur when excessive water vapor is present in the feed gas. These reactions can lead to the formation of nitrogen oxides and nitric acid, which can cause corrosion and reduce ozone capacity. By removing moisture from the air using the air dryer (10), the occurrence of these undesired reactions is minimized, thereby improving the overall performance and longevity of the system. This ensures that the AOP system operates at optimal efficiency, reducing maintenance requirements and extending the lifespan of the components.

Moreover, the described system may optimize ozone production by employing low-pressure mercury UV lamps (41) that emit UV light at specific wavelengths, namely 253.7 nm and 185 nm. These wavelengths have been carefully selected based on their effectiveness in generating ozone and producing hydroxyl radicals, which are essential for the oxidation of DBPs. The combination of the air dryer (10) and these specific UV lamps (41) in the UV-based ozone generator (40) enables the system to produce high-rate ozone consistently, enhancing the overall effectiveness of the AOP process.

The above-described modular design of the AOP system, which includes the air dryer (10), feed gas line (20), and UV-based ozone generator (40), allows for easy integration into existing swimming pool filtration systems. This scalability and adaptability make the system a versatile solution for reducing DBPs in various sizes and types of swimming pools. The system can be easily customized to meet the specific requirements of different pool configurations, ensuring widespread applicability.

Also, the system offers cost-effectiveness and efficiency by optimizing ozone production and minimizing operational problems caused by humid air. The increased ozone yield achieved through the use of the air dryer (10) and specific UV lamps (41) contributes to lower operating costs and improved system performance. The reduced maintenance requirements, resulting from the prevention of undesired reactions and corrosion, further enhance the cost-effectiveness of the AOP system. By efficiently reducing DBPs, the invention provides a sustainable and economical solution for maintaining water quality in swimming pools.

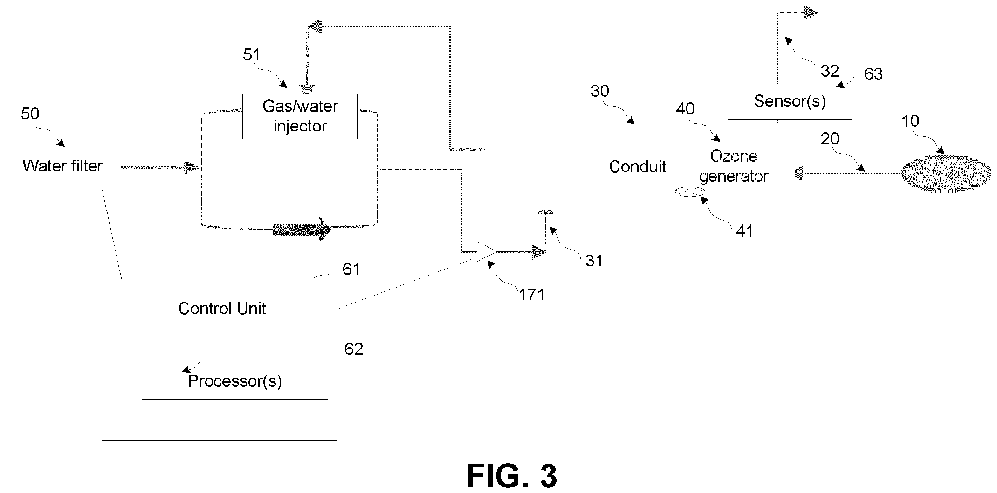

According to some embodiments of the present invention, as depicted in FIG. 3, there is provided an AOP system such as (5), with a control unit (61), that includes a processor (62), such as a microcontroller or a controller and/or any integrated circuit (IC) or a chipset with processing abilities for monitoring and adjusting the operating parameters of the AOP system. The control unit may include or be connected to one or more sensors (63) for measuring water quality parameters, including DBP levels, pH, and/or temperature. This allows the unit to receive data from the sensor(s) and adjust accordingly the intensity of the UV lamp(s) (41) and/or the flow rate of the swimming pool water through the treatment conduit (30) based on the measured water quality parameters. The flow rate can be controlled using a valve (171) such as a ball valve, a butterfly valve, a globe valve, and/or a needle valve. For example, if the DBP levels are higher than the desired threshold, the control unit may increase the intensity of the UV lamps (41) to generate more ozone and enhance the oxidation of DBPs. Similarly, if the pH or temperature of the water is not within the optimal range, the controller may adjust the flow rate of the swimming pool water through the treatment conduit (30) to ensure efficient treatment.

According to some embodiments of the present invention, there is provided a swimming pool circulation system that integrates any of the above-described systems for reducing DBPs in swimming pool water. The swimming pool circulation system comprises a pump, a filtration system, the AOP system, and a return line. The pump is responsible for circulating the swimming pool water throughout the system. It draws water from the swimming pool and pushes it through the various components of the circulation system. The pump is typically sized according to the volume of the swimming pool and the desired turnover rate, which is the time required to circulate the entire volume of water in the pool through the system. The filtration system is designed to remove particulate matter, debris, and other contaminants from the circulated swimming pool water before the water enter the AOP system. The filtration system may include one or more filters, such as sand filters, cartridge filters, or diatomaceous earth (DE) filters. These filters trap and remove particles from the water, improving its clarity and reducing the overall contaminant load. After passing through the filtration system, the filtered swimming pool water enters the AOP system. The treated swimming pool water, now with significantly reduced DBP levels, exits the AOP system and is returned to the swimming pool via a return line. The return line may be equipped with one or more return jets or inlets, which are strategically placed in the swimming pool to ensure proper circulation and mixing of the treated water with the existing pool water.

By integrating the AOP system into the swimming pool circulation system, the invention provides a comprehensive solution for maintaining water quality and reducing DBPs in swimming pools. The continuous circulation of water through the pump, filtration system, and AOP system ensures that the entire volume of pool water is consistently treated, providing a safe and comfortable swimming environment for users.

The swimming pool circulation system with the integrated AOP system offers several advantages. First, it allows for the efficient and automated treatment of swimming pool water, reducing the need for manual intervention and maintaining consistent water quality. Second, by reducing DBPs, the system minimizes the potential for adverse health effects and user discomfort associated with these contaminants. Third, the integration of the AOP system into the existing circulation system simplifies installation and maintenance, as it does not require significant modifications to the pool's plumbing or structure.

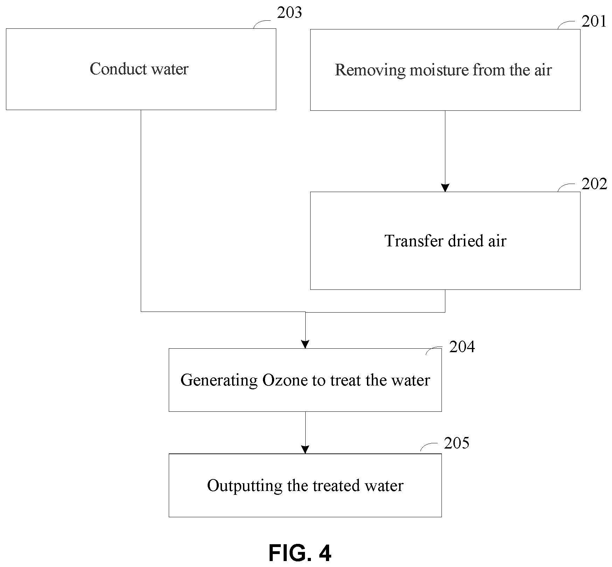

Reference is also made to FIG. 4 which is a flowchart 200 of a method for reducing DBPs in swimming pool water using an AOP system, such as the system depicted in FIG. 1, according to some embodiments of the present invention. As shown at (201), ambient air is dried by removing moisture from the air using an air dryer (10). Then, as shown at (202), the dried air from the air dryer (10) is transferred to an UV-based ozone generator (40) through a feed gas line (20). In parallel, as shown at (203), swimming pool water, optionally filtered using a filtration system (50), are conducted to enter a treatment conduit (30), optionally through a pool water inlet (31). Now, as shown at (204), ozone is generated in the UV-based ozone generator (40) by exposing the dried air to UV light emitted by at least one UV lamp (41) at wavelengths of 253.7 nm and 185 nm. This allows treating the filtered swimming pool water in the treatment conduit (30) with the generated ozone to reduce the concentration of DBPs in the water to below 0.3 ppm. Now, as shown at 205, the treated swimming pool water are outputted from the treatment conduit (30) through a pool water outlet (32); and returned to the swimming pool.

As indicated herein the removal of moisture from the ambient air by the air dryer (10) is performed prior to the air entering the UV-based ozone generator (40), enhancing the efficiency of ozone production and minimizing the formation of undesired by-products.

Optionally, the humidity of the air entering the UV-based ozone generator (40) is monitored, for instance using the above-described control unit. This allows adjusting the operation of the air dryer (10) based on the monitored humidity to maintain optimal ozone production efficiency.

Optionally, ozone production is optimized by monitoring the humidity of the air entering the UV-based ozone generator (40), for instance using the above-described control unit. This allows adjusting the operation of the air dryer (10) accordingly. By continuously monitoring the humidity, the system can ensure that the air entering the UV-based ozone generator is sufficiently dry for optimal ozone production. For instance, If the monitored humidity exceeds a predetermined threshold, the system can adjust the operation of the air dryer (10) to remove more moisture from the air. This adjustment can involve increasing the cooling capacity of a refrigerant dryer, regenerating the desiccant in a desiccant dryer more frequently, or increasing the flow rate of air through a membrane dryer. By maintaining optimal humidity levels, the system ensures that the UV-based ozone generator operates at peak efficiency, maximizing ozone production and minimizing the formation of undesired by-products.

Optionally, a portion of the treated swimming pool water is recirculated back to the pool water inlet (31) to minimize water loss during the treatment process. This recirculation can be achieved by installing a bypass line that diverts a portion of the treated water from the pool water outlet (32) back to the pool water inlet (31).

In summary, the described methods and system provide an advanced oxidation process system that efficiently reduces disinfection by-products in swimming pool water by utilizing an air dryer and a UV-based ozone generator. The system offers a cost-effective and scalable solution for improving water quality and user comfort in swimming pool environments as described above.

It is expected that during the life of a patent maturing from this application many relevant UV lamps and control units will be developed and the scope of the term a UV lamp and a control unit is intended to include all such new technologies *a priori.*

As used herein the term "about" refers to ± 10 %.

The terms "comprise", "comprising", "includes", "including", "having" and their conjugates mean "including but not limited to".

The term "consisting of" means "including and limited to".

The term "consisting essentially of" means that the composition, method or structure may include additional ingredients, steps and/or parts, but only if the additional ingredients, steps and/or parts do not materially alter the basic and novel characteristics of the claimed composition, method or structure.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

It is the intent of the Applicant(s) that all publications, patents and patent applications referred to in this specification are to be incorporated in their entirety by reference into the specification, as if each individual publication, patent or patent application was specifically and individually noted when referenced that it is to be incorporated herein by reference. In addition, citation or identification of any reference in this application shall not be construed as an admission that such reference is available as prior art to the present invention. To the extent that section headings are used, they should not be construed as necessarily limiting. In addition, any priority document(s) of this application is/are hereby incorporated herein by reference in its/their entirety.

## Claims

1. An advanced oxidation process (AOP) system (100) for reducing disinfection by-products (DBPs) in swimming pool water, comprising:
∘ an air dryer (10) configured to dry ambient air by removing moisture from the air;
∘ a feed gas line (20) connected to the air dryer (10) for receiving the dried air;
∘ a treatment conduit (30) adapted to treat swimming pool water, comprising:
▪ a pool water inlet (31) adapted to receive the swimming pool water;
▪ a UV-based ozone generator (40) comprising at least one UV lamp (41) configured to emit UV light, the UV-based ozone generator (40) being connected to the feed gas line (20) and configured to receive the dried air from the air dryer (10); and
▪ a pool water outlet (32) adapted to output the treated swimming pool water; wherein the at least one UV lamp (41) is configured to treat the swimming pool water by generating ozone based on exposing the dried air to UV light; wherein the removal of moisture from the ambient air by the air dryer (10) is performed prior to the air entering the UV-based ozone generator (40).

2. The AOP system (100) of claim 1, further comprising a filtration system (50) for filtering the swimming pool water before entering the treatment conduit (30).

3. The AOP system (100) of claim 1 or 2, wherein the treatment conduit (30) reduces the DBPs to below 0.3 ppm.

4. The AOP system (100) of any one of claims 1 to 3, wherein the UV light is emitted at wavelengths of 253.7 nm and 185 nm.

5. The AOP system (100) of any one of claims 1 to 4, wherein the air dryer (10) is selected from the group consisting of refrigerant dryers, desiccant dryers, and membrane dryers.

6. The AOP system (100) of any one of claims 1 to 5, wherein the at least one UV lamp (41) is a low-pressure mercury lamp.

7. The AOP system (100) of any one of claims 1 to 6, wherein the UV-based ozone generator (40) comprises a plurality of UV lamps (41) arranged in a parallel configuration to increase ozone production capacity.

8. The AOP system (100) of any one of claims 1 to 7, wherein the treatment conduit (30) is made of a material resistant to ozone and UV light, selected from stainless steel and UV-stabilized polymers.

9. The AOP system (100) of any one of claims 1 to 8, further comprising a control unit (61) for monitoring and adjusting operating parameters of the AOP system (100), the control unit (61) comprising a processor (62) and one or more sensors (63) for measuring water quality parameters.

10. The AOP system (100) of claim 9, wherein the water quality parameters comprise at least one of DBP levels, pH, and temperature.

11. The AOP system (100) of claim 9 or 10, wherein the control unit (61) is configured to receive data from the sensors (63) and accordingly adjust an intensity of the at least one UV lamp (41) and/or a flow rate of the swimming pool water through the treatment conduit (30) using a valve (171).

12. A method for reducing disinfection by-products (DBPs) in swimming pool water using an advanced oxidation process (AOP) system (100), the method comprising:
∘ drying ambient air by removing moisture from the air using an air dryer (10);
o transferring the dried air from the air dryer (10) to an UV-based ozone generator (40) located in or in proximity to a treatment conduit (30) through a feed gas line (20);
∘ generating ozone in the UV-based ozone generator (40) by exposing the dried air to UV light emitted by at least one UV lamp (41) for treating swimming pool water in the treatment conduit (30) with the generated ozone to reduce the concentration of DBPs in the water to below 0.3 ppm;
∘ outputting the treated swimming pool water from the treatment conduit (30) through a pool water outlet (32).

13. The method of claim 12, further comprising:
∘ monitoring the humidity of the air entering the UV-based ozone generator (40); and
∘ adjusting the operation of the air dryer (10) based on the monitored humidity to maintain optimal ozone production efficiency.

14. The method of claim 12 or 13, further comprising:
∘ filtering the swimming pool water using a filtration system (50) before the water enters the treatment conduit (30); and
∘ receiving the filtered swimming pool water into the treatment conduit (30) through a pool water inlet (31).

15. A swimming pool circulation system (5) comprising:
∘ a pump for circulating swimming pool water;
∘ a filtration system (143) for filtering the circulated swimming pool water;
∘ an advanced oxidation process (AOP) system (100) according to any one of claims 1 to 11 for reducing disinfection by-products (DBPs) in the filtered swimming pool water; and
∘ a return line for returning the treated swimming pool water from the AOP system (100) to a swimming pool (149).
